# EUROPÄISCHE PATENTSCHRIFT

(11) **EP 0 635 398 B1**
(45) Veröffentlichungstag und Bekanntmachung des Hinweises auf die Patenterteilung: **01.10.1997**
(21) Anmeldenummer: 94890121.0
(22) Anmeldetag: 12.07.1994
(51) Int. Cl.: B60R 11/04

(54) **Vorrichtung zur Erfassung eines Verkehrsunfalles**
Device for registering of a traffic accident
Dispositif pour l'enregistrement d'un accident de la circulation

(30) Priorität: 20.07.1993 AT 1438/93
(43) Veröffentlichungstag der Anmeldung: 25.01.1995
(73) Patentinhaber: Kamelreiter, Friedrich, Dr. Dipl.-Ing., A-1140 Wien (AT); Kersche, Franz, Dipl.-Ing., A-1130 Wien (AT)
(72) Erfinder: Kamelreiter, Friedrich, Dr. Dipl.-Ing., A-1140 Wien (AT); Kersche, Franz, Dipl.-Ing., A-1130 Wien (AT)
(74) Vertreter: Atzwanger, Richard, Dipl.-Ing. Patentanwalt

(56) Entgegenhaltungen:
- DE-A- 3 628 782
- FR-A- 2 554 800
- FR-A- 2 577 868
- FR-A- 2 611 826
- GB-A- 819 884
- GB-A- 2 163 720

## Beschreibung

Die gegenständliche Erfindung betrifft eine Vorrichtung zur Erfassung der Spuren eines Verkehrsunfalles mittels einer photographischen Kamera mit einem Stativ, das an einem Kraftfahrzeug, insbesondere am Dach des Kraftfahrzeuges, befestigt ist und an dessen freiem Ende ein Träger für die Kamera angeordnet ist.

Nach Verkehrsunfällen besteht für die Exekutive bzw. für Sachverständige das Erfordernis, eine genaue Unfallaufnahme durchzuführen. Da hierfür einerseits die Lage der Fahrzeuge und andererseits die Fahrbahndetails ebenso wie auf der Fahrbahn befindliche Spuren in ein Protokoll eingetragen werden müssen, wird hierdurch ein großer zeitlicher Aufwand bedingt.

Im Gegensatz zu Vermessungsbüros, welche bei derartigen Aufnahmen mit sehr teuren Geräten hohe Genauigkeiten erreichen, wird von der Exekutive nur entweder mittels eines Meßrades oder mittels eines Maßbandes eine große Anzahl von Punkten vermessen. Da mit diesem Verfahren Winkel nicht oder nur sehr ungenau ermittelt werden können, ist dieses Verfahren nicht nur zeitraubend, sondern ist zudem das hierdurch erzielte Ergebnis ungenau.

Es ist weiters bekannt, Unfallstellen mittels eines Spezialstatives von etwa 11 m Höhe und eines Weitwinkelobjektives photographisch zu erfassen, wodurch die Vermessung mit der erforderlichen Genauigkeit durchgeführt werden kann. Da jedoch für dieses Verfahren das Erfordernis besteht, die Unfallstelle für die Durchführung der photographischen Aufnahmen über eine lange Zeit abzusperren, wird hierdurch eine weitere starke Behinderung des Verkehrs bedingt.

Der gegenständlichen Erfindung liegt somit die Aufgabe zugrunde, eine Einrichtung zu schaffen, mittels welcher es möglich ist, die Spuren eines Verkehrsunfalles photographisch zu erfassen, wobei das Erfordernis vermieden werden soll, hierfür die Unfallstelle abzusperren. Diese Bedingung kann jedoch nur dadurch erfüllt werden, daß das Fahrzeug, auf welchem die Kamera befestigt ist, durch ein für den öffentlichen Verkehr zugelassenes Fahrzeug gebildet ist. Hierdurch ist gewährleistet, daß dieses Fahrzeug zugleich mit den anderen auf der Straße bzw. auf der Fahrbahn befindlichen Fahrzeugen die Unfallstelle passieren kann, wobei im Bereich der Unfallstelle mittels der Kamera die für die Erfassung der Spuren des Unfalles erforderlichen photographischen Aufnahmen gemacht werden.

Eine weitere Bedingung dafür, die Spuren eines Verkehrsunfalles möglichst vollständig erfassen zu können, besteht zudem darin, daß das Stativ so ausgebildet ist bzw. sich die Kamera vom Fahrzeug, auf welchem das Stativ befestigt ist, - in Abhängigkeit von der Höhe über der Fahrbahn - in einem solchen Abstand befindet, daß gewährleistet ist, daß die Spuren des Verkehrsunfalles vollständig erfaßbar sind, also nicht durch das Fahrzeug verdeckt werden. Anders ausgedrückt muß die Kamera in Bezug auf das Fahrzeug so angeordnet sein, daß sich das Fahrzeug zumindest nahezu vollständig außerhalb des Öffnungswinkels der Kamera befindet. Zudem muß die Kamera senkrecht auf die Fahrbahn ausgerichtet sein, um hierdurch maßstabgetreue Aufnahmen anfertigen zu können.

Für die gegenständliche Erfindung, wie sie in der Einleitung definiert ist, stellt die FR-A-2 577 868 den nächstliegenden Stand der Technik dar. Diese Literaturstelle offenbart ein Kraftfahrzeug, welches mit einem Träger zur Befestigung einer photographischen Kamera ausgebildet ist. Durch diese bekannte Vorrichtung wird zwar die vorstehend erläuterte erste Bedingung erfüllt. Demgegenüber werden durch diese bekannte Vorrichtung die weiteren Bedingungen nicht erfüllt. Dieses Erfordernis besteht deshalb nicht, da diese Vorrichtung nicht zur Erfassung der Spuren von Verkehrsunfällen bestimmt ist, sondern vielmehr dazu dient, vom Fahrzeug entfernt befindliche Objekte photographisch zu erfassen.

Der gegenständlichen Erfindung liegt demnach die Aufgabe zugrunde, eine Vorrichtung zu schaffen, durch welche die Spuren von Verkehrsunfällen vollständig erfaßt werden können, um hierauf maßstabgetreue Pläne anfertigen zu können, ohne daß hierdurch eine Behinderung des Verkehrs bedingt wird. Dies wird erfindungsgemäß dadurch erzielt, daß sich der Träger für die Kamera, in Draufsicht auf das Fahrzeug gesehen, so weit außerhalb des Fahrzeuges befindet oder soweit in eine Lage außerhalb des Fahrzeuges verstellbar ist, daß sich das Kraftfahrzeug zumindest nahezu vollständig außerhalb des Öffnungswinkels der Kamera befindet, wobei die Kamera zumindest nahezu senkrecht auf die Fahrbahn ausgerichtet ist.

Vorzugsweise ist das Stativ mittels eines Rahmens in der Art eines Dachträgers am Kraftfahrzeug befestigbar. Dabei kann der Träger für die Kamera vor der Vorderfront des Kraftfahrzeuges befinden bzw. kann er in eine vor der Vorderseite befindliche Lage verstellbar sein.

Nach weiteren bevorzugten Merkmalen sind die Streben des Stativs am Dach des Kraftfahrzeuges und bzw. im Bereich der vorderen Stoßstange oder der hinteren Stoßstange befestigt, ist das Stativ mittels eines Lagers gegenüber einem zweiten am Dach des Kraftfahrzeuges befestigten Rahmen um eine vertikale Achse verdrehbar, sind die Streben des Stativs gegenüber dem am Dach des Fahrzeuges befestigten Gestell verschwenkbar bzw. verschiebbar, ist der Träger für die Kamera auf einer Strebe, welche gegenüber einer Strebe des Stativs verstellbar ist, vorgesehen bzw. ist zur Verstellung bzw. Verschwenkung der Streben mindestens ein Motor bzw. mindestens eine Seilwinde vorgesehen.

Der Gegenstand der Erfindung ist nachstehend anhand von in der Zeichnung dargestellten Ausführungsbeispielen näher erläutert. Es zeigen:
- Fig. 1: eine erste Ausführungsform einer erfindungsgemäßen Vorrichtung, in Seitenansicht,
- Fig. 2: eine Variante der Vorrichtung nach Fig.1, in Seitenansicht,
- die Fig. 3a und 3b und 3c: weitere Varianten der erfindungsgemäßen Vorrichtung gemäß Fig.1, in Seitenansicht,
- Fig. 4 und 5: eine zweite Ausführungsform einer erfindungsgemäßen Vorrichtung, in Seitenansicht und in Draufsicht,
- die Fig.4a und 4b: Details der Fig.4,
- die Fig. 6 und 7: eine zweite Ausführungsform einer erfindungsgemäßen Vorrichtung in unterschiedlichen Stellungen, jeweils in Seitenansicht, und
- Fig. 8: eine dritte Ausführungsform einer erfindungsgemäßen Vorrichtung, in Seitenansicht.

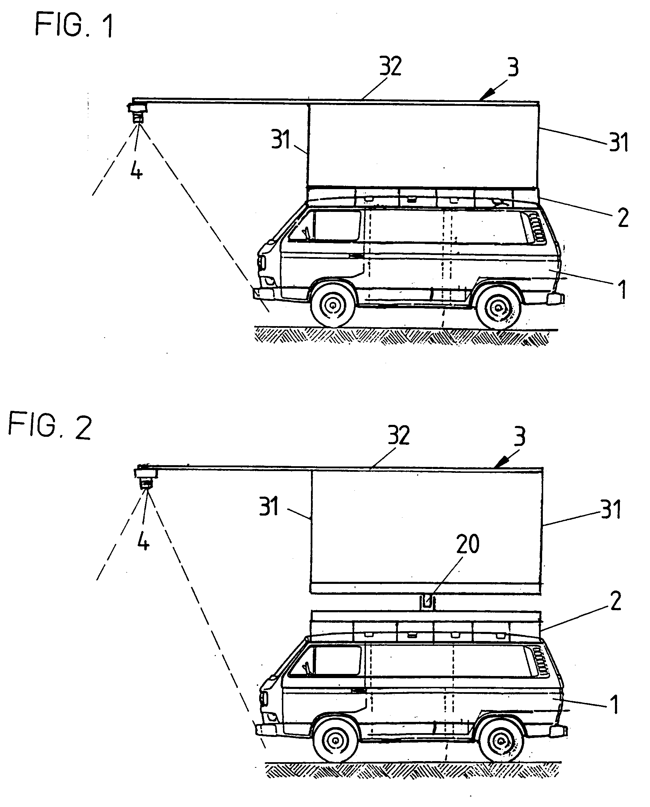

Wie aus Fig. 1 ersichtlich ist, ist am Dach eines Kraftfahrzeuges 1 nach der Art eines Lieferwagens ein Gestell 2 nach Art eines Dachträgers befestigt. An diesem Gestell 2 ist ein Stativ 3 befestigt, welches vier Streben 31 aufweist, an deren oberen Enden eine mittig über dem Fahrzeug 1 befindliche und über die Vorderfront des Fahrzeuges 1 ausragende Stange 32 angeordnet ist, deren vorderes Ende mit einem Träger für eine Kamera 4 ausgebildet ist. Die Kamera 4 befindet sich dabei so weit außerhalb des Fahrzeuges 1 und ist nach abwärts gerichtet, daß sich das Fahrzeug 1 zumindest weitestgehend außerhalb von deren Öffnungswinkel befindet. Hierdurch können die Spuren eines Verkehrsunfalles erfaßt werden, ohne vom Fahrzeug 1 verdeckt zu werden.

Bei der Ausführungsvariante gemäß Fig. 2 ist zwischen dem Gestell und dem Stativ 3 ein Lager 20 angeordnet, wodurch das Stativ 3 um eine vertikale Achse verdrehbar ist, sodaß die Kamera 4 in Draufsicht auf das Fahrzeug 1 in jegliche Lagen vor bzw. hinter dieses und seitlich desselben verstellt werden kann.

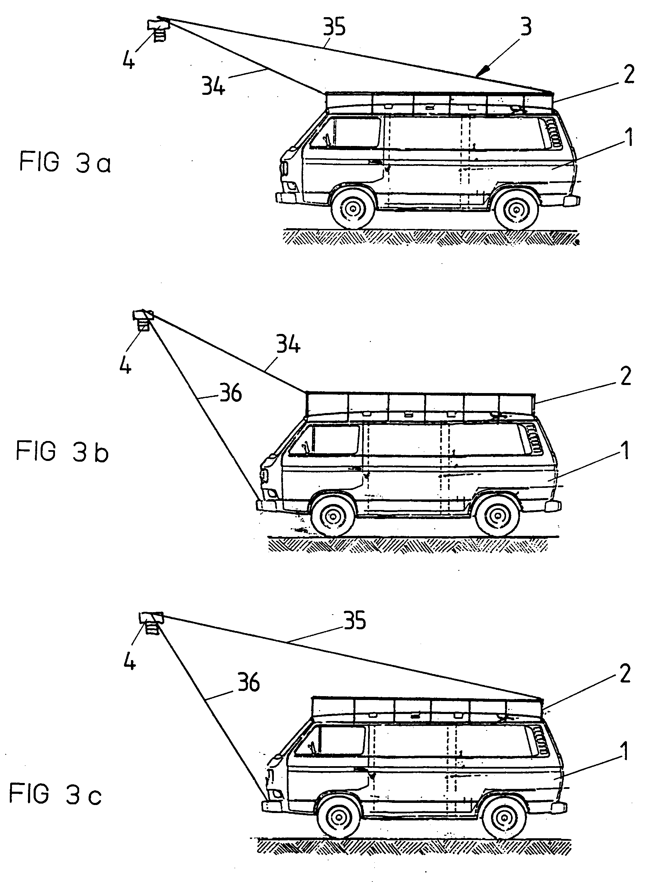

Bei den Ausführungsvarianten gemäß den Fig. 3a, 3b und 3c ist das Stativ 3 mit schräg nach oben abragenden Streben 34, 35 und 36 ausgebildet, welche am vorderen Ende bzw. am hinteren Ende des am Dach des Fahrzeuges 1 befindlichen Gestells 2 bzw. an der Vorderseite des Fahrzeuges 1 befestigt sind. Auch bei den Varianten gemäß den Fig. 2 und 3 ist die Kamera so angeordnet, daß sich das Fahrzeug 1 nahezu außerhalb des Öffnungswinkels der Kamera 4 befindet.

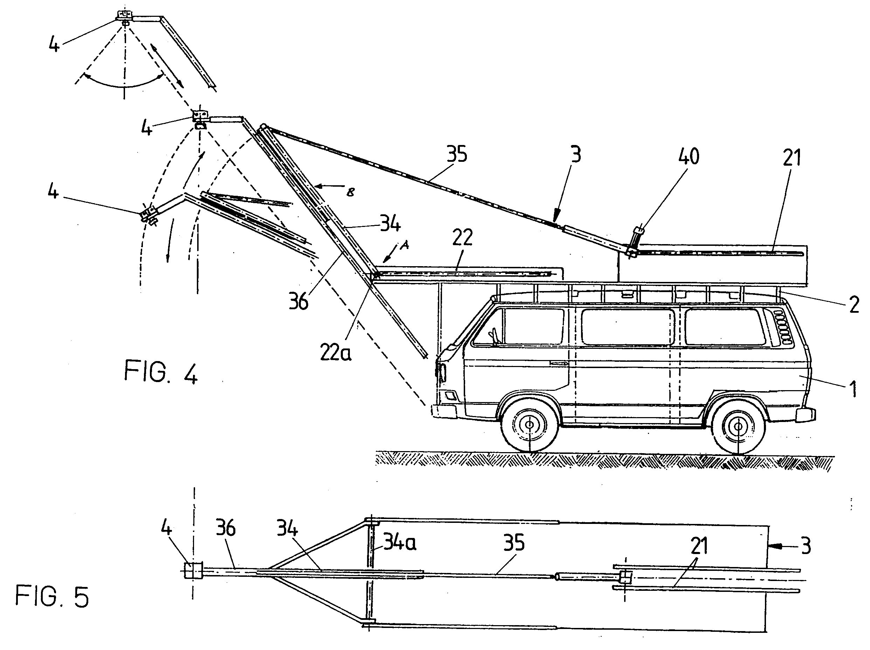

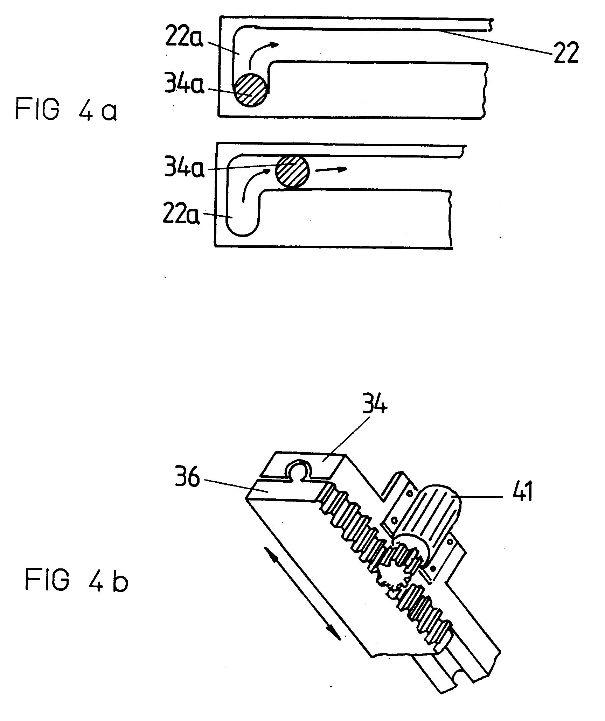

Bei den Vorrichtungen gemäß den vorstehend beschriebenen Ausführungsformen ist das Stativ 3 in seiner Größe nicht veränderbar. Demgegenüber sind nachstehend anhand der Fig. 4 bis 8 Stative 3 erläutert, welche in ihren Größen verstellbar sind, wodurch eine bessere Anpassung der Lage der Kamera 4 gegenüber den Gegebenheiten an unterschiedlichen Unfallstellen erzielt wird bzw. die Kamera 4 erst an der Unfallstelle in die erforderliche Höhenlage verstellt werden kann. Hierdurch können weiters unterschiedliche Abbildungsmaßstäbe eingestellt werden.

Auch gemäß der Ausführungsform nach den Fig.4 bis 7 ist am Dach des Fahrzeuges 1 ein Gestell 2 befestigt, auf welchem sich das Stativ 3 befindet. Dabei sind jedoch weiters am Gestell 2 zwei Führungen 21 und 22 vorgesehen, in welchen die unteren Enden der Streben 34 und 35 horizontal in Richtung der Längsachse des Fahrzeuges 1 verstellbar sind. Für die Verstellung der Strebe 35 ist ein Motor 40 vorgesehen. Die Führung 22 ist an ihrem vorderen Ende mit einem Lager 22a versehen, dessen Ausbildung und Funktion in Fig.4a dargestellt ist. Im Lager 22a ist ein Querbolzen 34a der Strebe 34 gelagert. Der Strebe 34 ist eine Strebe 36 zugeordnet, welche mittels eines in Fig. 4b dargestellten Motors 41 gegenüber der Strebe 34 verschiebbar ist.

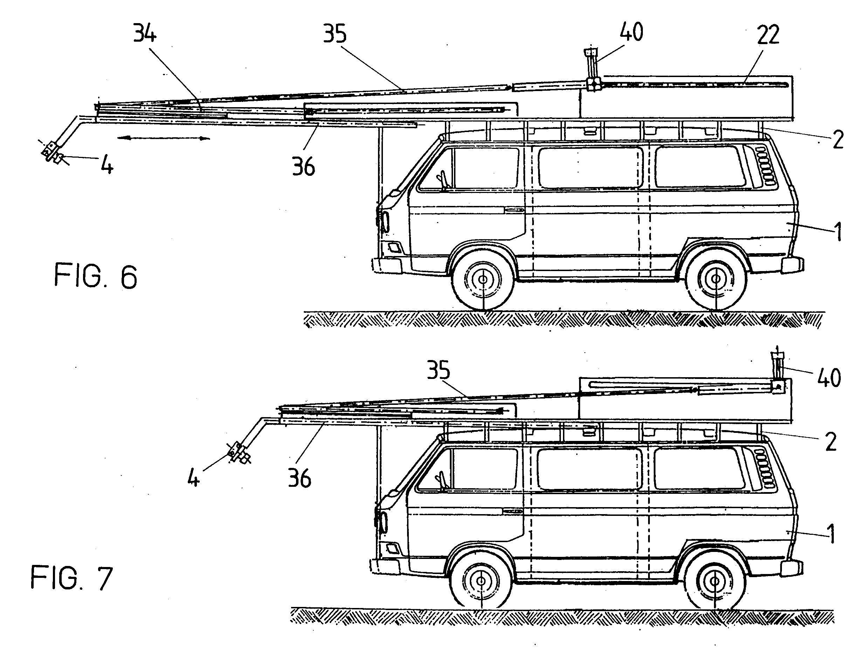

Aufgrund dieser konstruktiven Gestaltungen kann der Träger für die Aufnahmekamera 4 in die in den Fig. 4 und 6 dargestellten Lagen verstellt werden, um am Unfallort photographische Aufnahmen durchführen zu können. Demgegenüber wird für die Fahrten zum Unfallort oder vom Unfallort weg das Stativ 3 in die in Fig. 7 dargestellte Lage verstellt, um hierdurch den Verkehrsvorschriften zu entsprechen. Wie in Fig. 4 strichliert angedeutet ist, befindet sich die Kamera 4 in deren Betriebsstellungen in solchenn Lage, daß sich das Fahrzeug 1 außerhalb des Öffnungswinkels der Kamera 4 befindet.

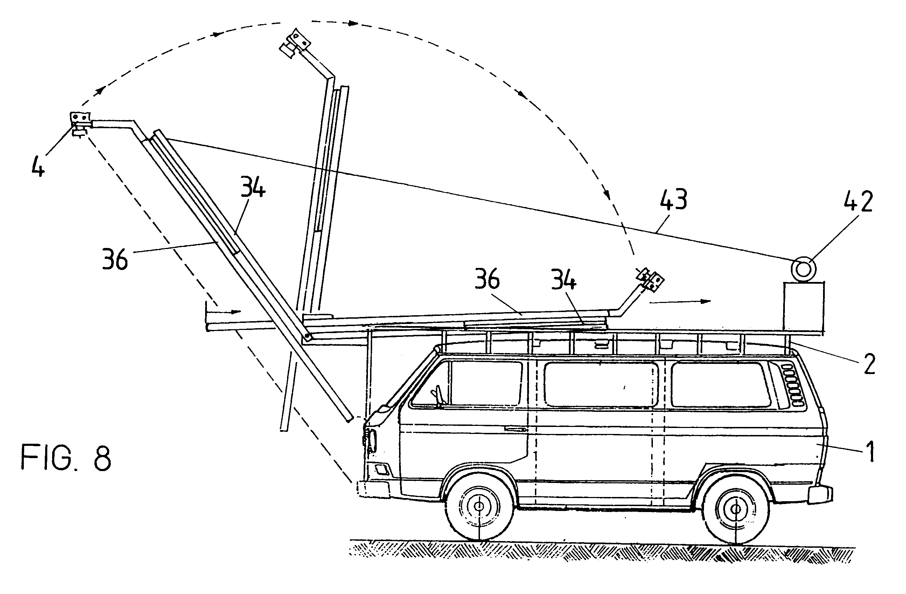

Bei der in Fig. 8 dargestellten dritten Ausführungsform einer erfindungsgemäßen Vorrichtung ist die Strebe 34 am vorderen Ende des Gestells 2 gelagert, wodurch die Strebe 34 zugleich mit der gegenüber dieser verstellbaren Strebe 36 mittels einer Seilwinde 42 und eines Zugseiles 43 aus der schrägen Arbeitsstellung in die horizontale Lage am Gestell 2 verschwenkbar ist und verschiebbar ist. Die Strebe 36 kann mittels eines Motors gegenüber der Strebe 34 verschoben werden.

Zur Aufnahme eines Unfallgeschehens wird das Stativ 3 in eine der in den Fig. 4 und Fig. 8 dargestellten Lagen verstellt, wodurch sich der Träger für die Aufnahmekamera 4 in der für die Durchführung der Aufnahmen erforderlichen Höhe vertikal über der Fahrbahn befindet. Hierauf wird das Fahrzeug 1 mit einer Geschwindigkeit bis etwa 30 km/h längs der Unfallstelle verfahren und wird eine Serie von Aufnahmen gemacht. Hierdurch können die Spuren des Unfalles mit der erforderlichen Genauigkeit und vollständig aufgenommen werden, ohne daß hierdurch eine Behinderung des Verkehrs bedingt wird.

## Patentansprüche

1. Vorrichtung zur Erfassung der Spuren eines Verkehrsunfalles mittels einer photographischen Kamera mit einem Stativ, das an einem Kraftfahrzeug (1), insbesondere am Dach des Kraftfahrzeuges (1), befestigt ist und an dessen freiem Ende ein Träger für die Kamera (4) angeordnet ist, dadurch gekennzeichnet, daß sich der Träger für die Kamera (4), in Draufsicht auf das Fahrzeug (1) gesehen, so weit außerhalb des Fahrzeuges (1) befindet oder so weit in eine Lage außerhalb des Fahrzeuges (1) verstellbar ist, daß sich das Kraftfahrzeug (1) zumindest nahezu vollständig außerhalb des Öffnungswinkels der Kamera (4) befindet, wobei die Kamera (4) zumindest nahezu senkrecht auf die Fahrbahn ausgerichtet ist.

2. Vorrichtung nach Patentanspruch 1, dadurch gekennzeichnet, daß das Stativ (3) mittels eines Rahmens (2) in der Art eines Dachträgers am Kraftfahrzeug (1) befestigbar ist.

3. Vorrichtung nach einem der Patentansprüche 1 und 2, dadurch gekennzeichnet, daß der Träger für die Kamera (4) sich vor der Vorderfront des Kraftfahrzeuges (1) befindet bzw. in eine vor der Vorderseite befindliche Lage verstellbar ist.

4. Vorrichtung nach einem der Patentansprüche 1 bis 3, dadurch gekennzeichnet, daß die Streben (31 bis 36) des Stativs (3) am Dach des Kraftfahrzeuges (1) und bzw. im Bereich der vorderen Stoßstange oder der hinteren Stoßstange befestigt sind.

5. Vorrichtung nach einem der Patentansprüche 1 bis 3, dadurch gekennzeichnet, daß das Stativ (3) mittels eines Lagers (20) gegenüber einem zweiten am Dach des Kraftfahrzeuges (1) befestigten Rahmen (2) um eine vertikale Achse verdrehbar ist.

6. Vorrichtung nach einem der Patentansprüche 1 bis 5, dadurch gekennzeichnet, daß die Streben (34, 35) des Stativs (3) gegenüber dem am Dach des Fahrzeuges (1) befestigten Gestell (2) verschwenkbar bzw. verschiebbar sind.

7. Vorrichtung nach einem der Patentansprüche 1 bis 6, dadurch gekennzeichnet, daß der Träger für die Kamera (4) auf einer Strebe (36), welche gegenüber einer Strebe (34) des Stativs (3) verstellbar ist, vorgesehen ist.

8. Vorrichtung nach einem der Patentansprüche 6 und 7, dadurch gekennzeichnet, daß zur Verstellung bzw. Verschwenkung der Streben (34, 36) mindestens ein Motor (40, 41) bzw. mindestens eine Seilwinde (42) vorgesehen ist.

## Claims

1. A device for recording the marks left by a road traffic accident by means of a photographic camera with a support which is attached to a motor vehicle (1), especially to the roof of the motor vehicle (1), and on whose free end there is arranged a holder for the camera (4), characterised in that the holder for the camera (4), when the vehicle (1) is seen in plan view, is positioned so far beyond the vehicle or may be adjusted into a position so far beyond the vehicle (1) that the motor vehicle (1) is at least virtually completely outside the aperture angle of the camera (4), the camera (4) being oriented at least virtually perpendicularly to the road.

2. A device according to claim 1, characterised in that the support (3) may be attached to the motor vehicle (1) by means of a frame (2) of the roof rack type.

3. A device according to either one of claims 1 and 2, characterised in that the holder for the camera (4) is located in front of the front end of the motor vehicle (1) or may be adjusted into a position in front of the front face.

4. A device according to any one of claims 1 to 3, characterised in that the struts (31 to 36) of the support (3) are attached to the roof of the motor vehicle (1) and respectively in the area of the front bumper or the rear bumper.

5. A device according to any one of claims 1 to 3, characterised in that the support (3) may be rotated by means of a bearing (20) about a vertical axis with respect to a second frame (2) attached to the roof of the motor vehicle (1).

6. A device according to any one of claims 1 to 5, characterised in that the struts (34, 35) of the support (3) may be swivelled or displaced with respect to the rack (2) attached to the roof of the vehicle (1).

7. A device according to any one of claims 1 to 6, characterised in that the holder for the camera (4) is provided on a strut (36) which may be adjusted with respect to a strut (34) of the support (3).

8. A device according to either one of claims 6 and 7, characterised in that at least one motor (40, 41) or at least one cable winch (42) is provided to adjust or swivel the struts (34, 36).

## Revendications

1. Dispositif d'enregistrement des traces d'un accident de la circulation au moyen d'un appareil photographique comportant un pied, qui est fixé sur un véhicule automobile (1), en particulier sur le toit du véhicule (1), et à l'extrémité libre duquel est placé un support pour l'appareil photographique (4), caractérisé en ce que le support pour l'appareil photographique (4), dans une vue de dessus du véhicule (1) se trouve suffisamment loin à l'extérieur du véhicule (1) ou est réglable suffisamment loin dans une position à l'extérieur du véhicule (1), pour que le véhicule (1) se trouve au moins presque totalement à l'extérieur de l'angle d'ouverture de l'appareil photographique (4), l'appareil photographique (4) étant orienté au moins à peu près perpendiculairement à la chaussée.

2. Dispositif selon la revendication 1, caractérisé en ce que le pied (3) peut être fixé sur le véhicule (1), au moyen d'un cadre (2), à la manière d'un porte-bagages de toit.

3. Dispositif selon l'une des revendications 1 et 2, caractérisé en ce que le support de l'appareil photographique (4) se trouve devant la face avant du véhicule (1) ou esst réglable dans une position se trouvant devant le côté avant.

4. Dispositif selon l'une des revendications 1 à 3, caractérisé en ce que les entretoises (31 à 36) du pied (3) sont fixées sur le toit du véhicule (1) et respectivement dans la zone du pare-chocs avant ou du pare-chocs arrière.

5. Dispositif selon l'une des revendications 1 à 3, caractérisé en ce que le pied (3) peut, au moyen d'un pivot (20), tourner autour d'un axe vertical, par rapport à un deuxième cadre (2) fixé sur le toit du véhicule (1).

6. Un dispositif selon l'une des revendications 1 à 5, caractérisé en ce que les entretoises (34, 35) du pied (3) peuvent pivoter ou coulisser par rapport au bâti (2) fixé sur le toit du véhicule (1).

7. Dispositif selon l'une des revendications 1 à 6, caractérisé en ce que le support de l'appareil photographique (4) est prévu sur une entretoise (36), qui est réglable par rapport à une entretoise (34) du pied (3).

8. Dispositif selon l'une des revendications 6 et 7, caractérisé en ce que pour le réglage ou le pivotement des entretoises (34, 36) il est prévu au moins un moteur (40, 41) ou au moins un treuil à câble (42).
